# EUROPEAN PATENT APPLICATION

(11) **EP 4 607 876 A1**
(43) Date of publication of application: **27.08.2025**
(21) Application number: 23887821.9
(22) Date of filing: 30.10.2023
(51) Int. Cl.: H04L 41/08

(54) **MACHINE LEARNING MANAGEMENT AND CONTROL METHOD AND APPARATUS**

(30) Priority: 11.11.2022 CN 202211410572
(71) Applicant: Huawei Technologies Co., Ltd., Shenzhen, Guangdong 518129 (CN)
(72) Inventor: XU, Ruiyue, Shenzhen, Guangdong 518129 (CN); SHI, Xiaoli, Shenzhen, Guangdong 518129 (CN)
(74) Representative: MERH-IP Matias Erny Reichl Hoffmann Patentanwälte PartG mbB
(86) International application number: PCT/CN2023/127620
(87) International publication number: WO 2024/099131

(57) **Abstract**

This application relates to the field of wireless communication technologies, and provides a machine learning management and control method and an apparatus, to reduce messages exchanged through interfaces. In the method, a first network element determines management and control information of a target ML entity, where the management and control information of the target ML entity includes target ML entity information and ML step requirement information. The first network element sends the management and control information of the target ML entity to a second network element. The second network element manages and controls a machine learning procedure of the target ML entity based on the ML step requirement information. According to the foregoing solutions, the first network element can automatically orchestrate and execute an ML workflow of an ML entity, thereby reducing messages exchanged between the first network element and the second network element, and avoiding a problem of time-consuming update of the ML entity while improving execution efficiency of a machine learning procedure. In addition, the second network element can differentially orchestrate and execute ML workflows of ML entities based on a requirement of the first network element.

## Description

### CROSS-REFERENCE TO RELATED APPLICATIONS

This application claims priority to Chinese Patent Application No. 202211410572.8, filed with the China National Intellectual Property Administration on November 11, 2022 and entitled "MACHINE LEARNING MANAGEMENT AND CONTROL METHOD AND APPARATUS", which is incorporated herein by reference in its entirety.

### TECHNICAL FIELD

This application relates to the field of wireless communication technologies, and in particular, to a machine learning management and control method and an apparatus.

### BACKGROUND

With improvement of network intelligence, increasingly more machine learning (machine learning, ML) entities are introduced into a network, including a network management system and a network device. In addition, workflows of ML entities in the network are executed more frequently, so that the network can perform adaptive change in real time according to services. For a large quantity of ML entities, each ML entity frequently executes ML workflows, and a large amount of data needs to be exchanged between an operator management system and a vendor management system for each ML workflow. This not only causes a large quantity of messages exchanged through interfaces, but also causes untimely update of the ML entity and low efficiency, thereby affecting network performance.

### SUMMARY

This application provides a machine learning management and control method and an apparatus, to reduce messages exchanged through interfaces and improve ML entity update efficiency.

According to a first aspect, a machine learning management and control method is provided. In the method, a first network element determines management and control information of a target ML entity. The management and control information of the target ML entity includes target ML entity information and ML step requirement information. The first network element sends the management and control information of the target ML entity to a second network element. The second network element manages and controls a machine learning procedure of the target ML entity based on the ML step requirement information.

According to the foregoing solution, the first network element may obtain the management and control information of the target ML entity, and deliver the management and control information to the second network element, so that the second network element manages and controls the machine learning procedure of the target ML entity. According to this solution, the first network element can automatically orchestrate and execute an ML workflow of an ML entity, thereby reducing messages exchanged between the first network element and the second network element, and avoiding a problem of time-consuming update of the ML entity while improving execution efficiency of a machine learning procedure. In addition, the second network element can differentially orchestrate and execute ML workflows of ML entities based on a requirement of the first network element.

In a possible implementation, the second network element sends machine learning management capability information to the first network element, where the machine learning management capability information includes an ML entity type and ML step capability information that are supported by the second network element. The first network element determines the management and control information of the target ML entity based on the management capability information. A type of the target ML entity is the ML entity type supported by the second network element, and the ML step requirement information matches the ML step capability information supported by the second network element.

According to this solution, the first network element may obtain the machine learning management capability information of the second network element, to determine the management and control information based on the management capability information of the second network element. This reduces difficulty and complexity in managing and controlling an ML workflow of an ML entity by the first network element caused by differences between ML workflows of ML entities, and enables the first network element to manage and control different ML entities based on the management and control information, and meets differentiated requirements of the first network element on ML workflows of different ML entity types. This further reduces complexity of ML workflow integration between the first network element and the second network element, and improves integration efficiency.

In a possible implementation, the first network element obtains the management capability information through a first interface model object corresponding to the management capability information in the second network element. The first interface model object is created by the second network element. In a possible implementation, the first network element sends, to the second network element, first request information used to request to create a second interface model object corresponding to the management and control information, where the first request information includes the management and control information. According to this solution, the first network element and the second network element may implement information exchange through an interface model object.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data available for the machine learning procedure of the target ML entity.

According to this solution, the first network element may obtain information about a step supported by an ML workflow of an ML entity of the second network element, to manage and control the ML workflow based on the supported step information.

In a possible implementation, the management and control information further includes a machine learning procedure trigger condition, and the machine learning procedure trigger condition indicates a condition for starting the machine learning procedure of the target ML entity.

According to this solution, the first network element may send the machine learning procedure trigger condition to the second network element, so that the second network element starts the machine learning procedure according to the trigger condition.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data that needs to be used in the machine learning procedure, and the second data information is determined based on the first data information.

According to this solution, the second network element may send, to the first network element, a requirement of the first network element on a step of the machine learning procedure, so that the second network element manages and controls the step of the machine learning procedure based on the requirement.

In a possible implementation, the management and control information further includes first indication information, and the first indication information indicates whether to delete an ML entity existing before the machine learning procedure corresponding to the target ML entity. According to this solution, the second network element may determine, based on the first indication information, whether to delete the ML entity existing before the machine learning procedure.

In a possible implementation, the second network element sends startup information to the first network element. The startup information includes a workflow identifier of the machine learning procedure of the target ML entity and the entity identifier of the target ML entity, and the startup information indicates that the second network element starts the machine learning procedure of the target ML entity.

According to this solution, the first network element may determine, based on the startup information sent by the second network element, that the second network element has started the machine learning procedure of the target ML entity.

In a possible implementation, the startup information further includes one or more of the following: an identifier of the management and control information, step progress information of the machine learning procedure of the target ML entity, and a version of the target ML entity. The step progress information indicates execution progress of a step in the machine learning procedure of the target ML entity.

According to this solution, the first network element may learn information about the machine learning procedure of the target ML entity based on the startup information, to monitor the machine learning procedure.

In a possible implementation, the first network element receives notification information from the second network element, where the notification information is used to notify that the second network element has created a third interface model object corresponding to the machine learning procedure of the target ML entity, and the notification information carries the startup information. According to this solution, the second network element may create an interface model object of a machine learning procedure, and implement information exchange with the first network element through the interface model object.

In a possible implementation, the second network element sends progress change information to the first network element, where the progress change information includes the workflow identifier of the machine learning procedure of the target ML entity and step progress information of the machine learning procedure of the target ML entity, and the step progress information indicates execution progress of a step included in the machine learning procedure of the target ML entity. According to this solution, the first network element may determine execution progress of the step included in the machine learning procedure.

In a possible implementation, the first network element sends second indication information to the second network element, where the second indication information includes the workflow identifier of the machine learning procedure of the target ML entity, and the second indication information indicates the second network element to resume the machine learning procedure of the target ML entity. According to this solution, the first network element may monitor the machine learning procedure, and indicate the second network element to resume performing the machine learning procedure.

In a possible implementation, the second indication information further includes a name of the step included in the machine learning procedure of the target ML entity. According to this solution, the first network element may monitor the step included in the machine learning procedure.

In a possible implementation, the first network element receives change information of the third interface model object from the second network element, where the change information carries the progress change information. The third interface model object is an interface model object that corresponds to the machine learning procedure of the target ML entity and that is created by the second network element.

In a possible implementation, the second indication information is used to request the second network element to configure a resuming indication parameter of the third interface model object, and the resuming indication parameter indicates the second network element to resume the machine learning procedure of the target ML entity. The third interface model object is an interface model object that corresponds to the machine learning procedure of the target ML entity and that is created by the second network element.

In a possible implementation, the first network element receives the progress change information from the second network element, where the progress change information includes the workflow identifier, and a status of the step included in the machine learning procedure of the target ML entity is waiting for confirmation by the first network element.

According to this solution, the second network element may execute, based on a requirement of the first network element, the step included in the machine learning procedure, feed back execution progress of the step to the first network element based on the requirement of the first network element, and resume executing the machine learning procedure after the first network element confirms the step.

In a possible implementation, the first network element receives a machine learning procedure end notification of the target ML entity from the second network element, where the machine learning procedure end notification of the target ML entity includes the workflow identifier of the machine learning procedure of the target ML entity, and the machine learning procedure end notification of the target ML entity indicates the second network element to end the machine learning procedure of the target ML entity. According to this solution, the first network element may determine, based on the end notification of the second network element, that the second network element has completed the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

According to a second aspect, a machine learning management and control method is provided. The method may be performed by a first network element, or may be performed by a chip/chip system. In the method, the first network element determines management and control information of a target machine learning ML entity. The management and control information of the target ML entity includes target ML entity information and ML step requirement information. The first network element sends the management and control information of the target ML entity to a second network element. The management and control information of the target ML entity indicates the second network element to manage and control the machine learning procedure of the target ML entity based on the ML step requirement information.

In a possible implementation, the first network element obtains machine learning management capability information from the second network element, where the management capability information includes an ML entity type and ML step capability information that are supported by the second network element. The first network element determines the management and control information of the target ML entity based on the management capability information. A type of the target ML entity is the ML entity type supported by the second network element, and the ML step requirement information matches the ML step capability information supported by the second network element.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data available for the machine learning procedure of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data that needs to be used in the machine learning procedure, and the second data information is determined based on the first data information.

In a possible implementation, the first network element obtains the management capability information through a first interface model object corresponding to the management capability information in the second network element. The first interface model object is created by the second network element.

In a possible implementation, the first network element sends, to the second network element, first request information used to request to create a second interface model object corresponding to the management and control information, where the first request information includes the management and control information.

In a possible implementation, the first network element receives startup information from the second network element, where the startup information includes a workflow identifier of the machine learning procedure of the target ML entity and the entity identifier of the target ML entity, and the startup information indicates that the second network element starts the machine learning procedure of the target ML entity.

In a possible implementation, the startup information further includes one or more of the following: an identifier of the management and control information, step progress information of the machine learning procedure of the target ML entity, and a version of the target ML entity. The step progress information indicates execution progress of a step in the machine learning procedure of the target ML entity.

In a possible implementation, the first network element receives notification information from the second network element, where the notification information is used to notify that the second network element has created a third interface model object corresponding to the machine learning procedure of the target ML entity, and the notification information carries the startup information.

In a possible implementation, the first network element receives progress change information from the second network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, the first network element receives change information of the third interface model object from the second network element, where the change information carries the progress change information. The third interface model object is an interface model object that corresponds to the machine learning procedure of the target ML entity and that is created by the second network element.

In a possible implementation, the first network element sends second indication information to the second network element, where the second indication information includes the workflow identifier of the machine learning procedure of the target ML entity, and the second indication information indicates the second network element to resume the machine learning procedure of the target ML entity.

In a possible implementation, the second indication information further includes a name of the step included in the machine learning procedure of the target ML entity.

In a possible implementation, the second indication information is used to request the second network element to configure a resuming indication parameter of the third interface model object, and the resuming indication parameter indicates the second network element to resume the machine learning procedure of the target ML entity. The third interface model object is an interface model object that corresponds to the machine learning procedure of the target ML entity and that is created by the second network element.

In a possible implementation, the first network element receives the progress change information from the second network element, where the progress change information includes the workflow identifier, and a status of the step included in the machine learning procedure of the target ML entity is waiting for confirmation by the first network element.

In a possible implementation, the first network element receives a machine learning procedure end notification of the target ML entity from the second network element, where the machine learning procedure end notification of the target ML entity includes the workflow identifier of the machine learning procedure of the target ML entity, and the machine learning procedure end notification of the target ML entity indicates the second network element to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

According to a third aspect, a machine learning management and control method is provided. The method may be performed by a first network element, or may be performed by a chip/chip system. In the method, management and control information of a target machine learning ML entity is determined. The management and control information of the target ML entity includes target ML entity information and ML step requirement information. The management and control information of the target ML entity is sent to a second network element. The management and control information of the target ML entity indicates the second network element to manage and control the machine learning procedure of the target ML entity based on the ML step requirement information.

In a possible implementation, machine learning management capability information is obtained from the second network element, where the management capability information includes an ML entity type and ML step capability information that are supported by the second network element. The management and control information of the target ML entity is determined based on the management capability information. A type of the target ML entity is the ML entity type supported by the second network element, and the ML step requirement information matches the ML step capability information supported by the second network element.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data available for the machine learning procedure of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data that needs to be used in the machine learning procedure, and the second data information is determined based on the first data information.

In a possible implementation, the management capability information is obtained through a first interface model object corresponding to the management capability information in the second network element. The first interface model object is created by the second network element.

In a possible implementation, first request information used to request to create a second interface model object corresponding to the management and control information is sent to the second network element, where the first request information includes the management and control information.

In a possible implementation, startup information is received from the second network element, where the startup information includes a workflow identifier of the machine learning procedure of the target ML entity and the entity identifier of the target ML entity, and the startup information indicates that the second network element starts the machine learning procedure of the target ML entity.

In a possible implementation, the startup information further includes one or more of the following: an identifier of the management and control information, step progress information of the machine learning procedure of the target ML entity, and a version of the target ML entity. The step progress information indicates execution progress of a step in the machine learning procedure of the target ML entity.

In a possible implementation, notification information is received from the second network element, where the notification information is used to notify that the second network element has created a third interface model object corresponding to the machine learning procedure of the target ML entity, and the notification information carries the startup information.

In a possible implementation, progress change information is received from the second network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, change information of the third interface model object is received from the second network element, where the change information carries progress change information. The third interface model object is an interface model object that corresponds to the machine learning procedure of the target ML entity and that is created by the second network element.

In a possible implementation, second indication information is sent to the second network element, where the second indication information includes the workflow identifier of the machine learning procedure of the target ML entity, and the second indication information indicates the second network element to resume the machine learning procedure of the target ML entity.

In a possible implementation, the second indication information further includes a name of the step included in the machine learning procedure of the target ML entity.

In a possible implementation, the second indication information is used to request the second network element to configure a resuming indication parameter of the third interface model object, and the resuming indication parameter indicates the second network element to resume the machine learning procedure of the target ML entity. The third interface model object is an interface model object that corresponds to the machine learning procedure of the target ML entity and that is created by the second network element.

In a possible implementation, the progress change information is received from the second network element, where the progress change information includes the workflow identifier, and a status of the step included in the machine learning procedure of the target ML entity is waiting for confirmation.

In a possible implementation, a machine learning procedure end notification of the target ML entity is received from the second network element, where the machine learning procedure end notification of the target ML entity includes the workflow identifier of the machine learning procedure of the target ML entity, and the machine learning procedure end notification of the target ML entity indicates the second network element to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

According to a fourth aspect, a machine learning management and control method is provided. The method may be performed by a second network element, or may be performed by a chip/chip system. In the method, the second network element receives management and control information of a target machine learning ML entity from a first network element. The management and control information of the target ML entity includes target ML entity information and ML step requirement information. The second network element manages and controls a machine learning procedure of the target ML entity based on the ML step requirement information.

In a possible implementation, the second network element sends machine learning management capability information to the first network element, where the machine learning management capability information includes an ML entity type and ML step capability information that are supported by the second network element. A type of the target ML entity is the ML entity type supported by the second network element, and the ML step requirement information matches the ML step capability information supported by the second network element.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data that needs to be used in machine learning of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data available for machine learning, and the second data information is determined based on the first data information.

In a possible implementation, the second network element creates a first interface model object corresponding to the management capability information, where the first interface model object includes the management capability information.

In a possible implementation, the second network element receives first request information that is from the first network element and that is used to request to create a second interface model object corresponding to the management and control information, where the first request information includes the management and control information.

In a possible implementation, the second network element creates a third interface model object corresponding to the machine learning procedure of the target ML entity of the machine learning procedure of the target ML entity, where the third interface model object includes one or more of the following parameters: a workflow identifier of the machine learning procedure of the target ML entity, the entity identifier, an identifier of the management and control information, and step progress information of the machine learning procedure of the target ML entity. The step progress information indicates execution progress of a step included in the machine learning procedure of the target ML entity.

In a possible implementation, the step progress information includes a step name, a step status, a step progress percentage, and a step result. The step status includes "not started", "in progress", "waiting for confirmation", or "completed". The step result includes "succeed" or "fail".

In a possible implementation, the second network element sends startup information to the first network element, where the startup information includes a workflow identifier of the machine learning procedure of the target ML entity and the entity identifier of the target ML entity. The step progress information indicates execution progress of a step included in the machine learning procedure of the target ML entity.

In a possible implementation, the startup information further includes one or more of the following: the identifier of the management and control information, the step progress information of the machine learning procedure of the target ML entity, and a version of the target ML entity.

In a possible implementation, the second network element sends notification information to the first network element, where the notification information is used to notify that the second network element has created a third interface model object corresponding to the machine learning procedure of the target ML entity, and the notification information carries the startup information.

In a possible implementation, the second network element sends progress change information to the first network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, the second network element sends change information of the third interface model object to the first network element, where the change information includes progress change information. The third interface model object is an interface model object that corresponds to the machine learning procedure of the target ML entity and that is created by the second network element.

In a possible implementation, the second network element receives second indication information from the first network element, where the second indication information includes the workflow identifier of the machine learning procedure of the target ML entity, and the second indication information indicates the second network element to resume the machine learning procedure of the target ML entity.

In a possible implementation, the second indication information further includes a name of the step included in the machine learning procedure of the target ML entity.

In a possible implementation, the second indication information is used to request the second network element to configure a resuming indication parameter of the third interface model object, and the resuming indication parameter indicates the second network element to resume the machine learning procedure of the target ML entity. The third interface model object is an interface model object that corresponds to the machine learning procedure of the target ML entity and that is created by the second network element.

In a possible implementation, the second network element sends the progress change information to the first network element, where the progress change information includes the workflow identifier, and a status of the step included in the machine learning procedure of the target ML entity is waiting for confirmation.

In a possible implementation, the second network element sends a machine learning procedure end notification of the target ML entity to the first network element, where the machine learning procedure end notification of the target ML entity includes the workflow identifier of the machine learning procedure of the target ML entity, and the machine learning procedure end notification of the target ML entity indicates the second network element to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

In a possible implementation, the second network element deletes a third interface model object corresponding to the machine learning procedure of the target ML entity, where the third interface model object is an interface model object that corresponds to the machine learning procedure of the target ML entity and that is created by the second network element.

According to a fifth aspect, a machine learning management and control method is provided. The method may be performed by a second network element, or may be performed by a chip/chip system. In the method, management and control information of a target machine learning ML entity is received from a first network element. The management and control information of the target ML entity includes target ML entity information and ML step requirement information. A machine learning procedure of the target ML entity is managed and controlled based on the ML step requirement information.

In a possible implementation, machine learning management capability information is sent to the first network element, where the machine learning management capability information includes a supported ML entity type and supported ML step capability information. A type of the target ML entity is the supported ML entity type, and the ML step requirement information matches the supported ML step capability information.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data that needs to be used in machine learning of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data available for machine learning, and the second data information is determined based on the first data information.

In a possible implementation, a first interface model object corresponding to the management capability information is created, where the first interface model object includes the management capability information.

In a possible implementation, first request information that is from the first network element and that is used to request to create a second interface model object corresponding to the management and control information is received, where the first request information includes the management and control information.

In a possible implementation, a third interface model object corresponding to the machine learning procedure of the target ML entity of the machine learning procedure of the target ML entity is created, where the third interface model object includes one or more of the following parameters: a workflow identifier of the machine learning procedure of the target ML entity, the entity identifier, an identifier of the management and control information, and step progress information of the machine learning procedure of the target ML entity. The step progress information indicates execution progress of a step included in the machine learning procedure of the target ML entity.

In a possible implementation, the step progress information includes a step name, a step status, a step progress percentage, and a step result. The step status includes "not started", "in progress", "waiting for confirmation", or "completed". The step result includes "succeed" or "fail".

In a possible implementation, startup information is sent to the first network element, where the startup information includes a workflow identifier of the machine learning procedure of the target ML entity and the entity identifier of the target ML entity. The step progress information indicates execution progress of a step included in the machine learning procedure of the target ML entity.

In a possible implementation, the startup information further includes one or more of the following: the identifier of the management and control information, the step progress information of the machine learning procedure of the target ML entity, and a version of the target ML entity.

In a possible implementation, notification information is sent to the first network element, where the notification information is used to notify that a third interface model object corresponding to the machine learning procedure of the target ML entity is created, and the notification information carries the startup information.

In a possible implementation, progress change information is sent to the first network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, change information of the third interface model object is sent to the first network element, where the change information includes progress change information. The third interface model object is a created interface model object corresponding to the machine learning procedure of the target ML entity.

In a possible implementation, second indication information is received from the first network element, where the second indication information includes the workflow identifier of the machine learning procedure of the target ML entity, and the second indication information indicates to resume the machine learning procedure of the target ML entity.

In a possible implementation, the second indication information further includes a name of the step included in the machine learning procedure of the target ML entity.

In a possible implementation, the second indication information is used to request to configure a resuming indication parameter of the third interface model object, and the resuming indication parameter indicates to resume the machine learning procedure of the target ML entity. The third interface model object is a created interface model object corresponding to the machine learning procedure of the target ML entity.

In a possible implementation, the progress change information is sent to the first network element, where the progress change information includes the workflow identifier, and a status of the step included in the machine learning procedure of the target ML entity is waiting for confirmation.

In a possible implementation, a machine learning procedure end notification of the target ML entity is sent to the first network element, where the machine learning procedure end notification of the target ML entity includes the workflow identifier of the machine learning procedure of the target ML entity, and the machine learning procedure end notification of the target ML entity indicates to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

In a possible implementation, a third interface model object corresponding to the machine learning procedure of the target ML entity is deleted, where the third interface model object is a created interface model object corresponding to the machine learning procedure of the target ML entity.

According to a sixth aspect, a communication apparatus is provided, and includes a processing unit and a transceiver unit.

The processing unit is configured to determine management and control information of a target machine learning ML entity. The management and control information of the target ML entity includes target ML entity information and ML step requirement information. The transceiver unit is configured to send management and control information of the target ML entity to a second network element. The management and control information of the target ML entity indicates the second network element to manage and control the machine learning procedure of the target ML entity based on the ML step requirement information.

In a possible implementation, the transceiver unit is further configured to: obtain machine learning management capability information from the second network element, where the management capability information includes an ML entity type and ML step capability information that are supported by the second network element; and determine the management and control information of the target ML entity based on the management capability information. A type of the target ML entity is the ML entity type supported by the second network element, and the ML step requirement information matches the ML step capability information supported by the second network element.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data available for the machine learning procedure of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data that needs to be used in the machine learning procedure, and the second data information is determined based on the first data information.

In a possible implementation, the transceiver unit is specifically configured to obtain the management capability information through a first interface model object corresponding to the management capability information in the second network element. The first interface model object is created by the second network element.

In a possible implementation, the transceiver unit is specifically configured to send, to the second network element, first request information used to request to create a second interface model object corresponding to the management and control information, where the first request information includes the management and control information.

In a possible implementation, the transceiver unit is further configured to receive startup information from the second network element, where the startup information includes a workflow identifier of the machine learning procedure of the target ML entity and the entity identifier of the target ML entity, and the startup information indicates that the second network element starts the machine learning procedure of the target ML entity.

In a possible implementation, the startup information further includes one or more of the following: an identifier of the management and control information, step progress information of the machine learning procedure of the target ML entity, and a version of the target ML entity. The step progress information indicates execution progress of a step in the machine learning procedure of the target ML entity.

In a possible implementation, the transceiver unit is specifically configured to receive notification information from the second network element, where the notification information is used to notify that the second network element has created a third interface model object corresponding to the machine learning procedure of the target ML entity, and the notification information carries the startup information.

In a possible implementation, the transceiver unit is further configured to receive progress change information from the second network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, the transceiver unit is specifically configured to receive change information of the third interface model object from the second network element, where the change information carries the progress change information. The third interface model object is an interface model object that corresponds to the machine learning procedure of the target ML entity and that is created by the second network element.

In a possible implementation, the transceiver unit is further configured to send second indication information to the second network element, where the second indication information includes the workflow identifier of the machine learning procedure of the target ML entity, and the second indication information indicates the second network element to resume the machine learning procedure of the target ML entity.

In a possible implementation, the second indication information further includes a name of the step included in the machine learning procedure of the target ML entity.

In a possible implementation, the second indication information is used to request the second network element to configure a resuming indication parameter of the third interface model object, and the resuming indication parameter indicates the second network element to resume the machine learning procedure of the target ML entity. The third interface model object is an interface model object that corresponds to the machine learning procedure of the target ML entity and that is created by the second network element.

In a possible implementation, the transceiver unit is further configured to receive the progress change information from the second network element, where the progress change information includes the workflow identifier, and a status of the step included in the machine learning procedure of the target ML entity is waiting for confirmation.

In a possible implementation, the transceiver unit is further configured to receive a machine learning procedure end notification of the target ML entity from the second network element, where the machine learning procedure end notification of the target ML entity includes the workflow identifier of the machine learning procedure of the target ML entity, and the machine learning procedure end notification of the target ML entity indicates the second network element to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

According to a seventh aspect, a communication apparatus is provided, and includes a processing unit and a transceiver unit.

The transceiver unit is configured to receive management and control information of a target machine learning ML entity from a first network element. The management and control information of the target ML entity includes target ML entity information and ML step requirement information. The processing unit is configured to manage and control a machine learning procedure of the target ML entity based on the ML step requirement information.

In a possible implementation, the transceiver unit is further configured to send machine learning management capability information to the first network element, where the machine learning management capability information includes a supported ML entity type and supported ML step capability information. A type of the target ML entity is the supported ML entity type, and the ML step requirement information matches the supported ML step capability information.

In a possible implementation, the ML step capability information includes one or more of the following: names of one or more first steps, step control point capability information, and first data information. The step control point capability information indicates whether setting step control points for the one or more first steps is supported, the step control point includes a suspension point, and the step control point capability information one-to-one corresponds to the one or more first steps. The first data information is used to describe data that needs to be used in machine learning of the target ML entity.

In a possible implementation, the one or more first steps include one or more of the following: data preparation, ML entity training, ML entity validation, ML entity testing, ML entity downloading, ML entity installation, ML entity activation, and ML entity inference.

In a possible implementation, the target ML entity information includes the type of the target ML entity, and the management and control information is used for an ML entity corresponding to the type of the target ML entity. Alternatively, the target ML entity information includes an entity identifier of the target ML entity, and the management and control information is used for the target ML entity.

In a possible implementation, the management and control information further includes a machine learning procedure trigger condition, and the machine learning procedure trigger condition indicates a condition for starting the machine learning procedure of the target ML entity.

In a possible implementation, the management and control information further includes first indication information, and the first indication information indicates whether to delete an ML entity existing before the machine learning procedure corresponding to the target ML entity.

In a possible implementation, the ML step requirement information includes one or more of the following: names of one or more second steps, where the names of the one or more second steps are a part or all of the names of the one or more first steps; step control point requirement information, where the step control point requirement information indicates whether to set step control points for the one or more second steps, the step control point requirement information one-to-one corresponds to the second steps, and the step control point requirement information is determined based on the step control point capability information; and second data information, where the second data information indicates data available for machine learning, and the second data information is determined based on the first data information.

In a possible implementation, the processing unit is further configured to create a first interface model object corresponding to the management capability information, where the first interface model object includes the management capability information.

In a possible implementation, the transceiver unit is specifically configured to receive first request information that is from the first network element and that is used to request to create a second interface model object corresponding to the management and control information, where the first request information includes the management and control information.

In a possible implementation, the processing unit is further configured to create a third interface model object corresponding to the machine learning procedure of the target ML entity of the machine learning procedure of the target ML entity, where the third interface model object includes one or more of the following parameters: a workflow identifier of the machine learning procedure of the target ML entity, the entity identifier, an identifier of the management and control information, and step progress information of the machine learning procedure of the target ML entity. The step progress information indicates execution progress of a step included in the machine learning procedure of the target ML entity.

In a possible implementation, the step progress information includes a step name, a step status, a step progress percentage, and a step result. The step status includes "not started", "in progress", "waiting for confirmation", or "completed". The step result includes "succeed" or "fail".

In a possible implementation, the transceiver unit is further configured to send startup information to the first network element, where the startup information includes a workflow identifier of the machine learning procedure of the target ML entity and the entity identifier of the target ML entity. The step progress information indicates execution progress of a step included in the machine learning procedure of the target ML entity.

In a possible implementation, the startup information further includes one or more of the following: the identifier of the management and control information, the step progress information of the machine learning procedure of the target ML entity, and a version of the target ML entity.

In a possible implementation, the transceiver unit is specifically configured to send notification information to the first network element, where the notification information is used to notify that the third interface model object corresponding to the machine learning procedure of the target ML entity is created, and the notification information carries the startup information.

In a possible implementation, the transceiver unit is further configured to send progress change information to the first network element, where the progress change information includes the workflow identifier of the machine learning procedure of the target ML entity and step progress information of the machine learning procedure of the target ML entity, and the step progress information indicates execution progress of a step included in the machine learning procedure of the target ML entity.

In a possible implementation, the transceiver unit is specifically configured to send change information of the third interface model object to the first network element, where the change information includes the progress change information. The third interface model object is a created interface model object corresponding to the machine learning procedure of the target ML entity.

In a possible implementation, the transceiver unit is further configured to receive second indication information from the first network element, where the second indication information includes the workflow identifier of the machine learning procedure of the target ML entity, and the second indication information indicates to resume the machine learning procedure of the target ML entity.

In a possible implementation, the second indication information further includes a name of the step included in the machine learning procedure of the target ML entity.

In a possible implementation, the second indication information is used to request to configure a resuming indication parameter of the third interface model object, and the resuming indication parameter indicates to resume the machine learning procedure of the target ML entity. The third interface model object is a created interface model object corresponding to the machine learning procedure of the target ML entity.

In a possible implementation, the transceiver unit is further configured to send the progress change information to the first network element, where the progress change information includes the workflow identifier, and a status of the step included in the machine learning procedure of the target ML entity is waiting for confirmation.

In a possible implementation, the transceiver unit is further configured to send a machine learning procedure end notification of the target ML entity to the first network element, where the machine learning procedure end notification of the target ML entity includes the workflow identifier of the machine learning procedure of the target ML entity, and the machine learning procedure end notification of the target ML entity indicates to end the machine learning procedure of the target ML entity.

In a possible implementation, the machine learning procedure end notification of the target ML entity further includes step progress information of the machine learning procedure of the target ML entity, and the step progress information indicates execution progress of the step included in the machine learning procedure of the target ML entity.

In a possible implementation, the processing unit is further configured to delete a third interface model object corresponding to the machine learning procedure of the target ML entity, where the third interface model object is a created interface model object corresponding to the machine learning procedure of the target ML entity.

According to an eighth aspect, a communication apparatus is provided. The communication apparatus may be the communication apparatus according to any one of the possible implementations of the sixth aspect and the seventh aspect in the foregoing embodiments, or a chip disposed in the communication apparatus according to any one of the sixth aspect and the seventh aspect. The communication apparatus includes a communication interface and a processor, and optionally, further includes a memory. The memory is configured to store a computer program, instructions, or data. The processor is coupled to the memory and a communication interface. When the processor reads the computer program, the instructions, or the data, the communication apparatus performs the method performed by the first network element in any one of the possible implementations of the second aspect, or the communication apparatus performs the method performed by the second network element in any one of the possible implementations of the third aspect.

It should be understood that the communication interface may be implemented by using an antenna, a feeder, a codec, and the like in the communication apparatus. Alternatively, if the communication apparatus is a chip disposed in a network device or a terminal device, the communication interface may be an input/output interface of the chip, for example, an input/output pin. The communication apparatus may further include a transceiver, configured to perform communication between the communication apparatus and another device.

According to a ninth aspect, an embodiment of this application provides a chip system. The chip system includes a processor, and may further include a memory, configured to implement the method performed by the first network element or the second network element in any one of the possible implementations of the first aspect to the fifth aspect. In a possible implementation, the chip system further includes a memory, configured to store program instructions and/or data. The chip system may include a chip, or may include a chip and another discrete component.

According to a tenth aspect, this application provides a computer-readable storage medium. The computer-readable storage medium stores a computer program or instructions, and when the computer program or the instructions are run, the method performed by the first network element or the second network element in the foregoing aspects is implemented.

According to an eleventh aspect, a computer program product is provided. The computer program product includes computer program code or instructions, and when the computer program code or the instructions are run, the method performed by the first network element or the second network element in the foregoing aspects is implemented.

According to a twelfth aspect, a communication apparatus is provided. The communication apparatus includes units or modules configured to perform the methods in the foregoing aspects.

According to a thirteenth aspect, a chip system is provided, and includes a logic circuit and an input/output interface. The logic circuit is configured to perform the method performed by the first network element or the second network element. The input/output interface is configured to communicate with another apparatus.

For beneficial effects of the second aspect to the thirteenth aspect and the implementations of the second aspect to the thirteenth aspect, refer to descriptions of beneficial effects of the method and the implementations of the method according to the first aspect.

### BRIEF DESCRIPTION OF DRAWINGS

FIG. 1 is a diagram of a machine learning procedure;
FIG. 2 is a diagram of a communication system according to an embodiment of this application;
FIG. 3 is a diagram of another machine learning procedure;
FIG. 4 is a diagram of another communication system according to an embodiment of this application;
FIG. 5 is an example flowchart of a machine learning management and control method according to an embodiment of this application;
FIG. 6 is a diagram of an application scenario according to an embodiment of this application;
FIG. 7 is a diagram of a communication apparatus according to an embodiment of this application;
FIG. 8 is a diagram of another communication apparatus according to an embodiment of this application;
FIG. 9 is a diagram of another communication apparatus according to an embodiment of this application; and
FIG. 10 is a diagram of another communication apparatus according to an embodiment of this application.

### DESCRIPTION OF EMBODIMENTS

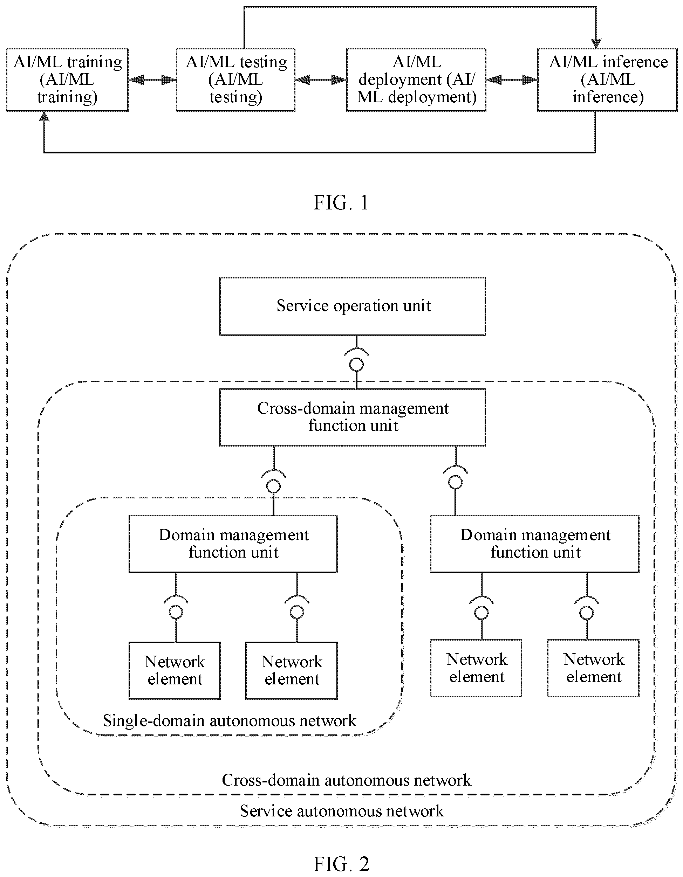

For ease of understanding of the technical solutions provided in embodiments of this application, the following explains and describes technical terms used in embodiments of this application.
1. A machine learning (machine learning, ML) entity refers to an ML model (model) or an entity including an ML model. An ML entity can be deployed on a network management system or a network element device.
2. An ML workflow (ML operational workflow) indicates life cycle management of an ML entity. As shown in FIG. 1, the following ML entity steps may be included:
   (1) ML training (ML training): learning from training data to generate a new or updated ML entity that can be used for inference.
   (2) ML testing (test): using test data to test an ML entity to evaluate performance of a trained ML entity and determine whether to use the trained ML entity for inference.
   (3) ML deployment (ML deployment): deploying (including installing and activating) the ML entity on a target inference entity, so that the target inference entity can use the ML entity for inference.
   (4) ML inference (ML inference): the target inference entity uses the ML entity to perform inference and obtain an inference result.
3. Interface model information (information model) indicates interaction information between two systems. isreadable=True represents that an interface caller can read a corresponding parameter, and isreadable=False represents that an interface caller cannot read a corresponding parameter. isWritable=True represents that an interface caller can specify a value of a corresponding parameter, and isWritable=False represents that an interface caller cannot specify a value of a corresponding parameter.
4. A step refers to an associated operation performed in a machine learning procedure. For example, the step may include data preparation, ML entity training, ML entity validation, ML entity testing, ML entity downloading, ML entity installation, ML entity activation, ML entity inference, and the like.
5. Step capability information indicates an operation supported by an ML entity in each step.
6. Step requirement information indicates a requirement for each step and can match the step capability information. For example, an operation indicated in the step requirement information needs to be included in the step capability information, that is, the step requirement information can include an operation only when an ML entity can support the operation.
7. A step control point indicates to perform corresponding control on a step. For example, a suspension point may indicate to suspend a step.

It may be understood that the ML in this specification may be exchanged with artificial intelligence (artificial intelligence, AI).

The technical solutions provided in embodiments of this application are described below with reference to the accompanying drawings.

The technical solutions provided in embodiments of this application may be applied to a scope of an autonomous network. FIG. 2 describes an autonomous network system provided in an embodiment of this application. As shown in FIG. 2, a scope of an autonomous domain network may include the following three cases.

A single-domain autonomous network may include a network element and a domain management function unit.

A cross-domain autonomous network may include a network element, a domain management function unit, and a cross-domain management function unit.

A service autonomous network may include a network element, a domain management function unit, a cross-domain management function unit, and a service operation unit.

The following describes network elements in embodiments of this application.

The service operation unit may also be referred to as a communication service management function (communication service management function) unit, and may provide functions and management services such as charging, settlement, accounting, customer service, business, network monitoring, communication service life cycle management, and service intent translation, including an operational system or a vertical operational technology system (vertical operational technology system) of an operator.

The cross-domain management function unit, also referred to as a network management function (network management function, NMF) unit, may provide one or more of the following functions or management services: network life cycle management, network deployment, network fault management, network performance management, network configuration management, network assurance, network optimization function, translation of a network intent from a communication service provider (intent from communication service provider, intent-CSP), translation of a network intent from a communication service consumer (intent from communication service consumer, intent-CSC), and the like. The network herein may include one or more network elements, subnetworks, or network slices. For example, the cross-domain management function unit may be a network slice management function (network slice management function, NSMF), a management data analytics function (management data analytical function, MDAF), a cross-domain self-organization network function (self-organization network function, SON-function), or a cross-domain intent management function unit.

It should be noted that, in some deployment scenarios, the cross-domain management system may also provide one or more of the following management functions or management services: subnetwork life cycle management, subnetwork deployment, subnetwork fault management, subnetwork performance management, subnetwork configuration management, subnetwork guarantee, a subnetwork optimization function, translation of a subnetwork intent from a communication service provider, translation of a subnetwork intent from a communication service consumer, and the like. The subnetwork may include a plurality of small subnetworks or a plurality of network slice subnetworks.

The domain management function unit, also referred to as a subnetwork management function (subnetwork management function, NMF) or a network element management function unit (network element/function management function), provides one or more of the following functions or management services: subnetwork or network element life cycle management, subnetwork or network element deployment, subnetwork or network element fault management, subnetwork or network element performance management, subnetwork or network element assurance, subnetwork or network element optimization management, subnetwork or network element intent translation, and the like. The subnetwork herein includes one or more network elements. Alternatively, the subnetwork herein may include one or more subnetworks, that is, the one or more subnetworks form a subnetwork with a larger coverage area. Alternatively, the subnetwork herein may also include one or more network slice subnetworks. A subnetwork may be described in one of the following ways:
a network in a technical domain, such as a radio access network, a core network, and a transmission network;
a network of a specific standard, for example, a global system for mobile communications (global system for mobile communications, GSM) network, a long term evolution (long term evolution, LTE) network, a 5G network, or the like;
a network provided by a vendor, for example, a network provided by a vendor X; and
a network in a geographical area, for example, a network of a factory A or a network of a city B.

A network element is an entity that provides a network service, including a core network element, an access network element, and the like. For example, the core network element may include, but is not limited to, an access and mobility management function (access and mobility management function, AMF) entity, a session management function (session management function, SMF) entity, a policy control function (policy control function, PCF) entity, a network data analytics function (network data analysis function, NWDAF) entity, a network repository function (network repository function, NRF), a gateway, and the like. The access network element may include but is not limited to: various types of base stations (for example, a generation NodeB (generation NodeB, gNB), an evolved NodeB (evolved NodeB, eNB), a central unit control plane (central unit control panel, CUCP), a central unit (central unit, CU), a distributed unit (distributed unit, DU), and a central unit user plane (central unit user panel, CUUP)).

In a service-based management architecture, focusing on a management service producer (Management Service Producer, MnS Producer) and a management service consumer (Management Service Consumer, MnS Consumer) should be understood as below.

When a management service is a management service provided by the foregoing service operation unit, the service operation unit is a management service producer, and another service operation unit may be a management service consumer.

When a management service is a management service provided by the cross-domain management function unit, the cross-domain management function unit is a management service producer, and the service operation unit is a management service consumer.

When a management service is a management service provided by the domain management function unit, the domain management function unit is a management service producer, and the cross-domain management function unit or the service operation unit is a management service consumer.

When a management service is a management service provided by the foregoing network element, the network element is a management service producer, and the domain management function unit, the cross-domain management function unit, or the service operation unit is a management service consumer.

With introduction of vertical industries, an increase of a quantity of terminal devices, and diversity of services, a network of an operator becomes increasingly more complex, making network operation and maintenance more difficult. How to reduce network operation and maintenance costs, simplify a network operation and maintenance process, and quickly deploy a network to meet the diversified services is an urgent point that needs to be improved for the network operation and maintenance.

Application of automation or intelligence technologies (referred to as autonomy technologies below) in mobile communication networks is increasingly becoming a focus and a research hotspot in the industry. The industry expects to introduce the autonomy technologies, such as artificial intelligence, machine learning, big data analysis, and digital twin, to help improve operation and maintenance efficiency of the mobile communication networks. The autonomy technology may be applied to a plurality of operation and maintenance workflows in a network life cycle, including network planning, network deployment, network optimization, service operation, and the like, to reduce manual operations, reduce an operating expense (operating expense, OPEX) of an operator, and improve operation and maintenance efficiency. Currently, network management systems, such as the management data analytics function (management data analytic function, MDAF) and network element devices, for example, the network data analytics function (network data analytic function, NWDAF) or the radio access network data analytics function (radio access network data analytic function, RDAF), are gradually introducing ML to implement an autonomy function of a network. Intelligence of both the network management system and the network element device depends on an ML model. Applying the ML model to the network management system or the network element device includes a complete ML workflow, including ML training, ML testing, ML deployment, and ML inference. The ML workflow is executed by the network management system or the network element device. However, the operator needs to control the ML workflow, so that the ML model can work according to a result expected by the operator.

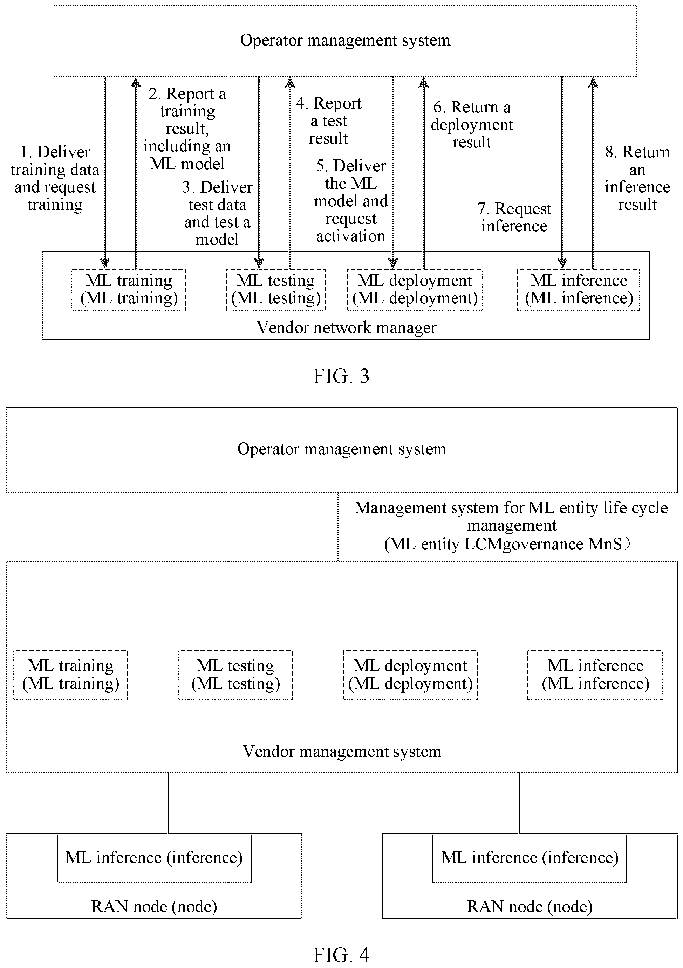

Currently, when a vendor management system implements an ML workflow, an operator management system and the vendor management system need to interact with each other about each step in the ML workflow, including starting a corresponding step, inputting data required by the step, and obtaining output data of the step for starting a next step. To be specific, each ML workflow requires a large amount of interaction. Refer to FIG. 3. For each ML workflow, an operator management system and a vendor management system may exchange the following information:
1. delivering training data and requesting training;
2. reporting a training result, including a trained ML model;
3. delivering test data and a training model and requesting to test a corresponding ML model;
4. reporting an ML model test result;
5. delivering the ML model and requesting installation and activation of the ML model;
6. reporting an ML model deployment result;
7. requesting inference on the ML model; and
8. returning an ML model inference result.

With improvement of network intelligence, increasingly more ML entities are introduced into a network, including a network management system and a network device. In addition, workflows of ML entities in the network are executed more frequently, so that the network can perform adaptive change in real time according to services. For a large quantity of ML entities, each ML entity frequently executes ML workflows, and a large amount of data needs to be exchanged between an operator management system and a vendor management system for each ML workflow. This not only causes a large quantity of messages exchanged through interfaces, but also causes untimely update of the ML entity and low efficiency, thereby affecting network performance.

In addition, execution of ML workflows of ML entities of different vendors or different ML entities of a same vendor is different, especially input and output of each ML workflow step are also different. If an operator management system needs to manage these differentiated ML entities in similar details, the operator management system needs to be proficient in each step of the ML workflow of these differentiated ML entities. This finally leads to complexity of the operator management system and difficulty in integration between the operator management system and different vendor management systems.

In view of this, an embodiment of this application provides a machine learning management and control method. According to the method provided in embodiments of this application, automatic orchestration and management of ML workflows are enabled, and a differentiated management and control requirement of an operator on ML workflows of different ML entities can be met. Refer to FIG. 4. In the method, an operator management system may obtain management and control information of a specific ML entity, and deliver the management and control information to a vendor management system. The vendor management system manages and controls a machine learning procedure of the specific ML entity based on the management and control information. According to this solution, the vendor management system can automatically orchestrate and execute an ML workflow of the ML entity, thereby avoiding a problem of time-consuming update of the ML entity while improving execution efficiency of the ML workflow. In addition, the vendor management system can differentially orchestrate and execute ML workflows of different ML entities based on a requirement of the operator management system.

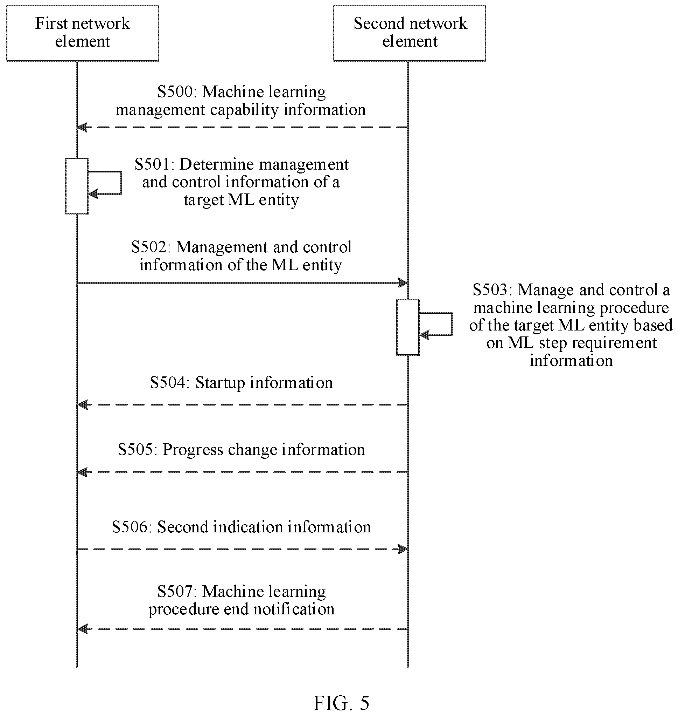

FIG. 5 is an example flowchart of a machine learning management and control method according to an embodiment of this application. The method may include the following operations. In the embodiment shown in FIG. 5, a first network element may be deployed in the operator management system shown in FIG. 4, and a second network element may be deployed in the vendor management system shown in FIG. 4.

The first network element and the second network element in the embodiment shown in FIG. 5 may include the following three scenarios.

Scenario #1: For a single-domain ML entity or an ML entity of a network element, the second network element may be a domain management function unit, and the first network element may be a cross-domain management function unit.

Scenario #2: For a cross-domain ML entity, the second network element may be a cross-domain management function unit, and the first network element may be a service operation unit.

Scenario #3: For an ML entity for service operation, the second network element may be a service operation unit, and the first network element may be a third-party system outside an autonomous network, for example, an enterprise system.

S501: The first network element determines management and control information of a target ML entity.

According to the foregoing descriptions, management and control information of the target ML entity may include target ML entity information (ML entity infos) and ML step requirement information (selected ML step info). The target ML entity information may indicate the target ML entity. For example, the target ML entity information may include one or more of a type of the target ML entity, information about a group in which the target ML entity is located, an identifier of the target ML entity, and the like.

The foregoing ML step requirement information may indicate a requirement of a second step included in a machine learning procedure of the target ML entity. For example, the ML step requirement information may include a step name (ML step name) of the second step, that is, the ML step requirement information may include the second step that needs to be included in the machine learning procedure of the target ML entity. Optionally, the ML step requirement information may further include step control point requirement information (control point indicator) and/or second data information. The step control point requirement information corresponds to the second step, and indicates whether to set a step control point, for example, a suspension point, for the second step. It may be understood that a control occasion, for example, a suspension occasion, may be preset or indicated by the first network element.

Alternatively, the second data information may one-to-one correspond to the second step, and the second data information may be used to describe data that needs to be used in the machine learning procedure of the target ML entity.

S502: The first network element sends the management and control information of the target ML entity to the second network element.

The management and control information of the target ML entity may indicate the second network element to manage and control the machine learning procedure of the target ML entity based on the ML step requirement information.

S503: The second network element manages and controls the machine learning procedure of the target ML entity based on the ML step requirement information.

For example, the second network element may determine the target ML entity based on the target ML entity information.

For example, when the target ML entity information includes the type of the target ML entity, the second network element may determine an ML entity included in the type of the target ML entity. It may be understood that the foregoing ML step requirement information may be used for the ML entity included in the type of the target ML entity. In a possible case, the second network element may manage and control, based on the ML step requirement information, a machine learning procedure of each ML entity included in the type. In other words, the target ML entity may be each ML entity described above. In another possible case, the second network element may manage and control, based on the ML step requirement information, a machine learning procedure of one of ML entities included in the type. In other words, the target ML entity may be an ML entity described above.

For another example, when the target ML entity information includes the information about the group in which the target ML entity is located, the second network element may determine the group in which the target ML entity is located. It may be understood that the foregoing ML step requirement information may be used for an ML entity included in the group in which the target ML entity is located. In a possible case, the second network element may manage and control, based on the ML step requirement information, a machine learning procedure of each ML entity included in the group in which the target ML entity is located. In other words, the target ML entity may be each ML entity described above. In another possible case, the second network element may manage and control, based on the ML step requirement information, a machine learning procedure of one of ML entities included in the group in which the target ML entity is located. In other words, the target ML entity may be an ML entity described above.

For another example, when the target ML entity information includes the identifier of the target ML entity, the second network element may determine the target ML entity based on the identifier of the target ML entity. It may be understood that the foregoing ML step requirement information may be used for the target ML entity. The second network element may manage and control the machine learning procedure of the target ML entity based on the ML step requirement information.

In S503, the second network element may determine a requirement of the machine learning procedure of the target ML entity based on the ML step requirement information. For example, when the ML step requirement information includes the step name of the second step, the second network element may manage and control the second step included in the machine learning procedure of the target ML entity.

Optionally, when the ML step requirement information includes the step control point requirement information, the second network element may determine, based on the step control point requirement information, whether to set a step control point for the second step. For example, when the step control point requirement information indicates to set a step control point for the second step, the second network element may set a step control point, for example, a suspension point, for the second step.

Optionally, when the ML step requirement information includes the second data information, the second network element may obtain, based on the second data information, corresponding data used for the machine learning procedure. For example, the second data information may indicate data access information, for example, a data storage address or a uniform resource identifier (uniform resource identifier, URI) of interface access. In a possible case, the second data information may be external data source information (external data source info). The external data source information may be used by the second network element to obtain external data. The external data is data that cannot be generated by the second network element and needs to be input by another system, and may be environment data such as an electronic map or a temperature, or application data such as video freezing, or manually calibrated data. The external data source information may be a schema (schema) of database objects, a data name, a data collection object, or the like.

In a possible embodiment, the ML step requirement information may further include a machine learning procedure trigger condition (ML workflow trigger info). The machine learning procedure trigger condition may indicate a condition for starting the machine learning procedure of the target ML entity. In other words, when the machine learning procedure trigger condition is met, the second network element may start the machine learning procedure of the target ML entity. It may be understood that the machine learning procedure trigger condition may be a time-based condition, for example, every Monday, or a specific daily time, or may be an event-based condition, for example, coverage performance degradation, excessively high network element load, or poor user experience. This is not specifically limited in this application.

In another possible embodiment, the ML step requirement information may further include first indication information, and the first indication information indicates whether to delete an ML entity existing before execution of the machine learning procedure of the target ML entity. For example, the first indication information may be indication information indicating whether to delete a source ML entity (delete source ML entity indicator). After the machine learning procedure of the target ML entity ends, a new ML entity is generated. In this case, whether to delete the source ML entity may be indicated by the first indication information. If the first indication information indicates to delete the source ML entity, the second network element may delete the source ML entity after the machine learning procedure of the target ML entity ends. If the second network element indicates not to delete the source ML entity, the second network element does not delete the source ML entity after the machine learning procedure of the target ML entity ends.

According to the foregoing solution, the first network element may obtain the management and control information of the target ML entity, and deliver the management and control information to the second network element, so that the second network element manages and controls the machine learning procedure of the target ML entity. In this solution, the first network element can automatically orchestrate and execute an ML workflow of an ML entity, thereby reducing messages exchanged between the first network element and the second network element, and avoiding a problem of time-consuming update of the ML entity while improving execution efficiency of a machine learning procedure. In addition, the second network element can differentially orchestrate and execute ML workflows of ML entities based on a requirement of the first network element.

In S502, the first network element may send first request information to the second network element. The first request information may indicate to request the second network element to create a second interface model object corresponding to the management and control information of the target ML entity, and the first request information may carry the management and control information. The second network element may create, based on the first request information, the second interface model object corresponding to the management and control information, and configure the management and control information into the second interface model object.

Optionally, the first network element may allocate an identifier of the management and control information to the management and control information, and use the first request information to carry the identifier of the management and control information and the corresponding management and control information. The second network element may create the second interface model object corresponding to the identifier of the management and control information.

The following describes, by using Table 1, the second interface model object corresponding to the management and control information.

**Table 1: Example of the second interface model object**

| Attribute name (attribute name) | Readable (isreadable) | Configurable (iswritable) |
|---|---|---|
| Management and control information identifier (MLMgovernanceprofield) | True (True) | True (True) |
| Target ML entity information (ML entityinfos) | True (True) | True (True) |
| ML step requirement information | True (True) | True (True) |

As shown in Table 1, the second network element may create the second interface model object corresponding to the management and control information. The second network element may set the management and control information, and attributes corresponding to the target ML entity information and the ML step requirement information that are included in the management and control information to be readable and configurable. In addition, the second network element may configure the management and control information carried in the first request information into the second interface model object.

As described above, the ML step requirement information may include one or more of the step name of the second step, the second data information, the machine learning procedure trigger condition, and the first indication information. The second network element may also configure the ML step requirement information in the second interface model object, as shown in Table 2.

**Table 2: Example of the second interface model object**

| Attribute name (attribute name) | Readable (isreadable) | Configurable (iswritable) |
|---|---|---|
| Management and control information identifier (MLMgovernanceprofield) | True (True) | True (True) |
| Target ML entity information (ML entityinfos) | True (True) | True (True) |
| ML step requirement information | True (True) | True (True) |
| Step name (selectedMLstepinfos) | True (True) | True (True) |
| Second data information (externaldatasourceinfo) | True (True) | True (True) |
| Machine learning procedure trigger condition (MLworkflowtriggerinfo) | True (True) | True (True) |
| First indication information (deletesourceMLentityindicator) | True (True) | True (True) |

As shown in Table 2, the second network element may set, in the second interface model object, an attribute corresponding to the ML step requirement information to be readable and configurable. In this way, the second network element may configure the ML step requirement information carried in the first request information into the second interface model object. It may be understood that Table 2 is shown by using an example in which the ML step requirement information includes the step name, the second data information, the machine learning procedure trigger condition, and the first indication information. The ML step requirement information may include one or more of the step name, the second data information, the machine learning procedure trigger condition, and the first indication information, and even information required by another machine learning procedure. This application does not specifically limit information included in the ML step requirement information.

According to the foregoing solution, information exchange and synchronization can be performed between the first network element and the second network element by introducing an interface model object. The second network element sets each attribute to be readable and configurable, to implement an interface openness capability of the second network element. Therefore, the first network element may configure a parameter whose attribute is configurable in the interface model object, to implement configuration of management and control information. In this way, the second network element can obtain the management and control information, to manage and control a machine learning procedure. Information exchange is implemented through an interface model object, so that exchange of interface information between the first network element and the second network element can be reduced.

In S503, after obtaining the management and control information, the second network element may manage and control the machine learning procedure of the target ML entity based on the ML step requirement information. In a possible case, before managing and controlling the machine learning procedure of the target ML entity, the second network element may obtain the management and control information corresponding to the target ML entity, and may establish an association relationship between the target ML entity and the management and control information. For example, the first network element may send, to the second network element, a plurality of pieces of management and control information corresponding to a plurality of target ML entities. In this case, before the second network element manages and controls machine learning procedures of the target ML entities, the second network element may determine the management and control information corresponding to the target ML entities in the foregoing plurality of pieces of management and control information, or the management and control information corresponding to the machine learning procedures of the target ML entities; and monitor the machine learning procedures of the target ML entities based on ML step requirement information included in the management and control information corresponding to the target ML entities.

In a possible embodiment, in S501, the first network element may determine the management and control information based on management capability information of the second network element. For example, the embodiment shown in FIG. 5 may further include the following operation S500.

S500: The first network element obtains machine learning management capability information from the second network element.

The management capability information (MLMcapability) may include an ML entity type and ML step capability information that are supported by the second network element. The first network element may determine the management and control information based on the management capability information. For example, the type of the target ML entity may be the ML entity type supported by the second network element. For another example, the ML step capability information may match the ML step information supported by the second network element.

In the foregoing descriptions, the ML entity type supported by the second network element indicates a range of ML entities to which the management capability information is applicable. The range of ML entities may include one or more ML entity types, that is, ML entity types supported by the second network element. In a possible case, the ML entity type may include a management data analysis type, a closed-loop scenario information type, or an intention scenario information type. Optionally, the ML entity of the foregoing type may be deployed on a management system.

The management data analysis type may indicate an ML entity for management data analysis, for example, include one or more of an ML entity for coverage problem analysis, an ML entity for paging optimization analysis, an ML entity for service experience analysis, an ML entity for fault prediction analysis, an ML entity for energy saving analysis, and an ML entity for mobility analysis. The closed-loop scenario information type may indicate an ML entity in a closed-loop scenario in a network, for example, include one or more of an ML entity for coverage optimization and an ML entity for load balancing. The intention scenario information type may indicate of an ML entity for intention obtaining, for example, include one or more an ML entity for area coverage optimization intention obtaining, an ML entity for area rate optimization intention obtaining, an ML entity for area capacity optimization intention obtaining, an ML entity for area energy saving intention obtaining, an ML entity for area wireless network deployment intention obtaining, and an ML entity for area wireless service deployment intention obtaining.

In another possible case, the ML entity type may include a network data analysis type and a base station intelligence type. Optionally, the ML entity of the foregoing type may be deployed on a network element device. The network data analysis type may indicate an ML entity for network data analysis, for example, include one or more of an ML entity for user equipment (user equipment, UE) mobility analysis, an ML entity for user data congestion analysis, an ML entity for quality of service (quality of service, QoS) experience continuity analysis, and an ML entity for network element (network function, NF) load analysis. The base station intelligence type may indicate a type of an ML entity for an intelligent base station, for example, include one or more of an ML entity for energy saving of a base station and an ML entity for load balancing of a base station.

In S500, the ML step capability information may include a step name (ML step name) of a first step. In a possible case, the step name of the second step is one or more items in the step name of the first step. That is, the first network element determines the ML step requirement information based on the ML step capability information. For example, the step name of the first step may include one or more of data preparation, ML entity training (ML entity training), ML entity validation (ML entityvalidation), ML entity testing (MLentitytest), ML entity downloading (MLentitydownload), ML entity installation (MLentityinstallment), ML entity activation (MLentityactivation), and ML entity inference (MLentityinference). Similarly, the step name of the second step may also include one or more items in the step name of the first step.

Optionally, the ML step capability information may further include step control point capability information (controlpointcanbeset) and/or first data information. The step control point capability information one-to-one corresponds to the first step, and describes whether the second network element allows an operator to set a step control point, for example, a suspension point, in a corresponding first step. The first data information may also be one-to-one correspond to the first step, and the first data information may be used to describe data available for the first step. Optionally, the first data information may be external data information (externaldatatobeused). The external data information may be used to obtain external data. For implementation, refer to the implementation of the second data information. Details are not described herein again.

In a possible case, the step control point requirement information in the ML step requirement information may be determined based on the step control point capability information included in the ML step capability information. For example, when the step control point capability information indicates that setting a step control point for the first step is allowed, the step control point requirement information may also indicate to set a step control point for the corresponding second step.

Similarly, the second data information may also be determined based on the first data information. For example, the first data information may indicate data access information, for example, a data storage address or a URI of interface access. In this case, the second data information corresponding to the second step in the ML step requirement information may be the same as the first data information.

According to the foregoing solution, the first network element may obtain the machine learning management capability information of the second network element, to determine the management and control information based on the management capability information of the second network element. This reduces difficulty and complexity in managing and controlling an ML workflow of an ML entity by the first network element caused by differences between ML workflows of ML entities, and enables the first network element to manage and control different ML entities based on the management and control information, and meets differentiated requirements of the first network element on ML workflows of different ML entity types. This further reduces complexity of ML workflow integration between the first network element and the second network element, and improves integration efficiency.

In S500, the first network element may obtain the management capability information through a first interface model object corresponding to the management capability information. For example, the second network element may create the first interface model object corresponding to the management capability information, and configure the corresponding management capability information into the first interface model object. Optionally, the second network element may allocate a management capability information identifier to the management capability information, and create the first interface model object corresponding to the management capability information identifier.

The following describes management capability information by using Table 3.

**Table 3: Example of the first interface model object**

| Attribute name (attribute name) | Readable (isreadable) | Configurable (iswritable) |
|---|---|---|
| Management capability information identifier (MLMcapabilityID) | True (True) | False (False) |
| ML entity type (MLentitytypes) | True (True) | False (False) |
| ML step capability information | True (True) | False (False) |

As shown in Table 3, the second network element may create a first interface model object of the management capability information, and set attributes corresponding to the management capability information identifier, the ML entity type, and the ML step capability information in the first interface model object to be readable but not configurable. In this way, the first network element may read the corresponding ML entity type and the ML step capability information through the first interface model object, and the information cannot be changed by another network element.

As described above, the ML step capability information may include one or more of the step name of the first step and the first data information. The second network element may also configure the ML step capability information into the first interface model object, as shown in Table 4.

**Table 4: Example of the first interface model object**

| Attribute name (attribute name) | Readable (isreadable) | Configurable (iswritable) |
|---|---|---|
| Management capability information identifier (MLMcapabilityID) | True (True) | False (False) |
| ML entity type (MLentitytypes) | True (True) | False (False) |
| ML step capability information | True (True) | False (False) |
| Step name (supportedMLstepinfos) | True (True) | False (False) |
| First data information (externaldatatobeused) | True (True) | False (False) |

As shown in Table 4, the second network element may set, in the first interface model object, an attribute corresponding to the ML step capability information to readable and not configurable. In this way, the first network element may read the ML step capability information through the first interface model object. It may be understood that Table 4 is shown by using an example in which the ML step capability information includes the step name and the first data information. The ML step capability information may include one or more of the step name and the first data information, and even information required by another machine learning procedure. This application does not specifically limit information included in the ML step capability information.

According to the foregoing solution, the second network element may implement information exchange between the first network element and the second network element by introducing an interface model object. The second network element may set an attribute of the interface model object to readable but not configurable, so that the first network element can read the management capability information by obtaining a parameter whose attribute is set to readable but not configurable in the interface model object, but cannot change the management capability information.

In embodiments of this application, in a process of managing and controlling the machine learning procedure of the target ML entity, the second network element may further feed back progress of the machine learning procedure to the first network element. Optionally, the embodiment shown in FIG. 5 may further include the following operation S504.

S504: The second network element sends startup information to the first network element.

Correspondingly, the first network element receives the startup information from the second network element.

For example, when the management and control information indicates the second network element to send the startup information to the first network element, the second network element may send the startup information to the first network element.

The startup information may include a workflow identifier of the machine learning procedure of the target ML entity and an entity identifier of the target ML entity. The startup information may indicate that the second network element has started the machine learning procedure of the target ML entity. Optionally, the startup information may further include one or more of the following: an identifier of the management and control information, step progress information of the machine learning procedure of the target ML entity, and a version of the target ML entity. The step progress information may indicate execution progress of a step in the machine learning procedure of the target ML entity. The version of the target ML entity may be understood as a version of an ML entity newly generated in the machine learning procedure.

According to the foregoing solution, the second network element may start a machine learning procedure of the target ML entity, and report, to the first network element based on a requirement of the first network element, information that the machine learning procedure of the target ML entity is started, so that the first network element monitors the machine learning procedure of the target ML entity, and perceives, in real time, a machine learning procedure of each ML entity started in the second network element.

In a possible implementation, before S504, the second network element may create a third interface model object corresponding to the machine learning procedure of the target ML entity. The second network element may configure parameters such as the workflow identifier, the identifier of the target ML entity, the identifier of the management and control information, and the step progress information of the machine learning procedure into the third interface model object. The following describes the foregoing parameters.
1. The workflow identifier uniquely identifies one ML workflow. The ML workflow may be the machine learning procedure of the target ML entity.
2. The identifier of the target ML entity indicates the target ML entity to which the ML workflow is applied.
3. The identifier of the management and control information indicates the management and control information associated with the ML workflow.
4. The step progress information (MLstepprogressinfolist) describes progress information of a step in the workflow. Optionally, the step progress information may include one or more pieces of the following information: a step name (MLstepname), where the step name may be one or more items in the step name of the second step, and the step name may be the step name of the second step supported by the target ML entity; a step status (MLstepstatus), where the step status describes a status of a corresponding step, a value of the step status may be "not started", "in progress", "waiting for confirmation", or "completed", and when the third interface model object is just created, a step status of an included step is "not started"; and a step progress percentage (MLsteppercentage) and a step result (MLstep), where the step result may be used to describe an execution result of a step in the machine learning procedure, and may be "successful" or "failed".

It may be understood that one machine learning procedure may include a plurality of steps. Therefore, there may be a plurality of pieces of step progress information, and each piece of step progress information may correspond to one step (the second step).

Optionally, the second network element may further configure, into the third interface model object, a version (MLversiontobeinstalled) of an ML entity newly generated in a workflow, that is, the version of the target ML entity. The version of the target ML entity may be used for subsequent ML entity downloading and ML entity installation.

The following describes the third interface model object by using Table 5.

**Table 5: Example of the third interface model object**

| Attribute name (attribute name) | Readable (isreadable) | Configurable (iswritable) |
|---|---|---|
| Workflow identifier (MLworkflowID) | True (True) | False (False) |
| Target ML entity identifier (MLentityID) | True (True) | False (False) |
| Management and control information identifier (MLMgovernanceprofileID) | True (True) | False (False) |
| Step progress information (MLstepprogressinfolist) | True (True) | False (False) |
| Target ML entity version (MLversiontobeinstalled) | True (True) | False (False) |

As shown in Table 5, the second network element may configure the foregoing parameters into the third interface model object, and set attributes corresponding to the foregoing parameters to be readable but not configurable. In this way, the first network element may determine related information of the machine learning procedure of the target ML entity based on the third interface model object.

In S504, the second network element may send notification information to the first network element, where the notification information may carry the startup information. The notification information may be used to notify that the second network element has created the third interface model object.

According to the foregoing solution, the second network element may create an interface model object corresponding to the machine learning procedure, to send progress information of the machine learning procedure and the like to the first network element. In the foregoing solution, the first network element may obtain information such as the workflow identifier and the identifier of the target ML entity from the notification information, and may determine the corresponding third interface model object, so that related information of the machine learning procedure of the corresponding target ML entity based on the parameter whose attribute is set to readable but not configurable in the third interface model object is read, to obtain progress information of a machine learning procedure of each ML entity in the second network element in real time.

Optionally, FIG. 5 may further include the following operations S505 to S507.

S505: The second network element sends progress change information to the first network element.

Correspondingly, the first network element receives the progress change information from the second network element.

The progress change information may include the workflow identifier of the machine learning procedure of the target ML entity and step progress information of the machine learning procedure of the target ML entity.

For example, when the step status in the machine learning procedure of the target ML entity changes, the second network element may send progress change information to the first network element, for example, a value of the step status from "not started" to "in progress".

For another example, if the management and control information indicates that step control points are set for one or more second steps, the second network element may send progress change information to the first network element when the second network element starts execution of the one or more second steps or ends execution of the one or more second steps. For example, values of step statuses of the one or more second steps may change from "not started" to "waiting for confirmation".

In a possible case, the second network element may configure a corresponding third interface model object, for example, configure a parameter of step progress information into the third interface model object, for example, a step status is configured from "not started" to "in progress", and a step progress percentage is configured as X%. The second network element may send change information of the third interface model object to the first network element, where the change information may be used to notify the first network element that a parameter in the third interface model object changes. In this way, the first network element may read each parameter in the third interface model object, to determine execution progress of a step included in the machine learning procedure of the target ML entity. The change information may include the workflow identifier and the identifier of the target ML entity. The first network element may determine the corresponding third interface model object based on the workflow identifier and the identifier of the target ML entity.

According to the foregoing solution, the second network element may alternatively send the progress change information of the machine learning procedure to the first network element based on a requirement of the first network element, so that the first network element can learn the progress of the machine learning procedure, to implement management and control on the machine learning procedure by the first network element.

S506: The first network element sends second indication information to the second network element.

Correspondingly, the second network element receives the second indication information from the first network element.

The second indication information may include the workflow identifier, and the second indication information may indicate the second network element to resume the machine learning procedure of the target ML entity. Optionally, the second indication information may further include a step name, and the second indication information may indicate the second network element to resume a step corresponding to the step name in the machine learning procedure. For example, in the progress change information in S505, when the step status of the second step is "waiting for confirmation", the first network element may send the second indication information to the second network element, to indicate the second network element to resume the machine learning procedure.

In a possible case, the second network element may also configure a parameter of the second indication information into the third interface model object, as shown in Table 6.

**Table 6: Example of the third interface model object**

| Attribute name (attribute name) | Readable (isreadable) | Configurable (iswritable) |
|---|---|---|
| Workflow identifier (MLworkflowID) | True (True) | False (False) |
| Target ML entity identifier (MLentityID) | True (True) | False (False) |
| Management and control information identifier (MLMgovernanceprofileID) | True (True) | False (False) |
| Step progress information (MLstepprogressinfolist) | True (True) | False (False) |
| Target ML entity version (MLversiontobeinstalled) | True (True) | False (False) |
| Second indication information (resumeindicator) | True (True) | True (True) |

As shown in Table 6, the second network element may set an attribute corresponding to the second indication information to readable and configurable. In this way, the first network element may configure the second indication information to indicate the second network element to resume the machine learning procedure. Optionally, the second indication information may include a step name. When reading the second indication information in the third interface model object, the second network element may resume the machine learning procedure of the target ML entity, that is, resume a step corresponding to the step name.

According to the foregoing solution, the second network element may set, based on a requirement of the first network element, a step control point for a step included in the machine learning procedure, and report progress information of the step to the first network element. The second network element may resume the machine learning procedure based on the indication information of the first network element. Because the second network element sets the attribute of the second indication information in the interface model object to readable and configurable, the first network element may indicate, by configuring the second indication information into the interface model object, the first network element to resume the machine learning procedure.

S507: The second network element sends a machine learning procedure end notification to the first network element.

Correspondingly, the first network element receives the procedure end notification from the second network element.

The procedure end notification may include the workflow identifier and step progress information. The procedure end notification may indicate the second network element to end a machine learning procedure of the target ML entity corresponding to the workflow identifier.

For example, when execution of an ML workflow is completed, the second network element deletes the third interface model object corresponding to the ML workflow, and sends a procedure end notification to the first network element. For example, the step progress information in the procedure end notification may include a step status, and a value of the step status is "completed"; may further include a step progress percentage, and a value of the step progress percentage is 100%; and may further include a step result, and a value of the step result is "successful" or "failed".

According to the foregoing solution, in embodiments of this application, a management and control interface for automatic management of a life cycle of an ML entity is introduced, for example, the first interface model object, the second interface model object, and the third interface model object. The first network element can automatically orchestrate and execute the machine learning procedure of the target ML entity, and learn progress of the machine learning procedure by using the management and control interface. This reduces information exchanged between the first network element and the second network element.

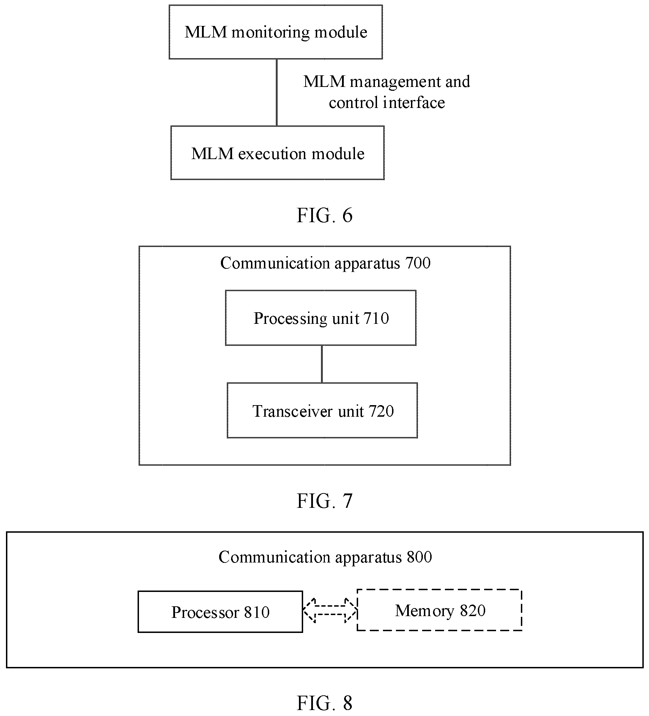

In the foregoing descriptions, the first network element may be an ML entity life cycle management (ML entity life cycle management, MLM) monitoring module, or an MLM monitoring module may be deployed in the first network element. The second network element may be an MLM execution module, or an MLM execution module may be deployed in the second network element. FIG. 6 is an example diagram of an application scenario according to an embodiment of this application. The technical solutions provided in embodiments of this application may be applied to an MLM monitoring module, an MLM execution module, and a logical interface that are shown in FIG. 6. For example, the logical interface is a logical interface between the MLM monitoring module and the MLM execution module, and may be referred to as an MLM management and control interface.

The MLM execution module performs ML entity life cycle management, including orchestration of an ML workflow and execution of each step in the ML workflow. The MLM monitoring module manages and controls ML entity life cycle management, for example, generates a management and control requirement on ML entity life cycle management, and monitors progress of ML entity life cycle management. The autonomous network monitoring module and the autonomous network execution module have the following deployment scenarios:

In a service-based management architecture, the ML monitoring module is a management service consumer, and the ML execution module is a management service producer. The logical interface is a management and control service for ML entity life cycle management (life cycle management, LCM), and is configured to implement the first interface model object, the second interface model object, and the third interface model object.

The following describes a communication apparatus for implementing the foregoing method in embodiments of this application with reference to the accompanying drawings. Therefore, all the foregoing content may be used in the following embodiments. Repeated content is not described again.

FIG. 7 is a block diagram of a communication apparatus 700 according to an embodiment of this application. The communication apparatus 700 may correspondingly implement functions or steps implemented by the first network element or the second network element in the foregoing method embodiments. The communication apparatus may include a processing unit 710 and a transceiver unit 720. Optionally, the communication apparatus may further include a storage unit. The storage unit may be configured to store instructions (code or a program) and/or data. The processing unit 710 and the transceiver unit 720 may be coupled to the storage unit. For example, the processing unit 710 may read the instructions (the code or the program) and/or the data in the storage unit, to implement a corresponding method. The foregoing units may be disposed independently, or may be partially or completely integrated.

In some possible implementations, the communication apparatus 700 can correspondingly implement the behavior and functions of the first network element in the foregoing method embodiments. For example, the communication apparatus 700 may be the first network element, or may be a component (for example, a chip or a circuit) used in the first network element. The transceiver unit 720 may be configured to perform all receiving or sending operations performed by the first network element in the embodiment shown in FIG. 5, for example, S501 in the embodiment shown in FIG. 5, and/or configured to support another process of the technology described in this specification. The processing unit 710 is configured to perform all operations other than the receiving or sending operations performed by the first network element in the embodiment shown in FIG. 5, and/or configured to support another process of the technology described in this specification.

For example, the processing unit 710 is configured to determine management and control information of a target machine learning ML entity. The management and control information of the target ML entity includes target ML entity information and ML step requirement information. The transceiver unit 720 is configured to send the management and control information of the target ML entity to the second network element. The management and control information of the target ML entity indicates the second network element to manage and control a machine learning procedure of the target ML entity based on the ML step requirement information.

In some possible implementations, the communication apparatus 700 can correspondingly implement the behavior and functions of the second network element in the foregoing method embodiments. For example, the communication apparatus 700 may be the second network element, or may be a component (for example, a chip or a circuit) used in the second network element. The transceiver unit 720 may be configured to perform all receiving or sending operations performed by the second network element in the embodiment shown in FIG. 5, for example, S501 in the embodiment shown in FIG. 5, and/or configured to support another process of the technology described in this specification. The processing unit 710 is configured to perform all operations other than the receiving or sending operations performed by the second network element in the embodiment shown in FIG. 5.

For example, the transceiver unit 720 is configured to receive the management and control information of the target machine learning ML entity from the first network element. The management and control information of the target ML entity includes target ML entity information and ML step requirement information. The processing unit 710 is configured to manage and control a machine learning procedure of the target ML entity based on the ML step requirement information.

For operations performed by the processing unit 710 and the transceiver unit 720, refer to the related descriptions in the foregoing method embodiments.

It should be understood that the processing unit 710 in this embodiment of this application may be implemented by a processor or a processor-related circuit component, and the transceiver unit 720 may be implemented by a transceiver, a transceiver-related circuit component, or a communication interface.

Based on a same concept, as shown in FIG. 8, an embodiment of this application provides a communication apparatus 800. The communication apparatus 800 includes a processor 810. Optionally, the communication apparatus 800 may further include a memory 820, configured to store instructions executed by the processor 810, or store input data needed by the processor 810 to run instructions, or store data generated after the processor 810 runs instructions. The processor 810 may implement the methods shown in the foregoing method embodiments based on the instructions stored in the memory 820.

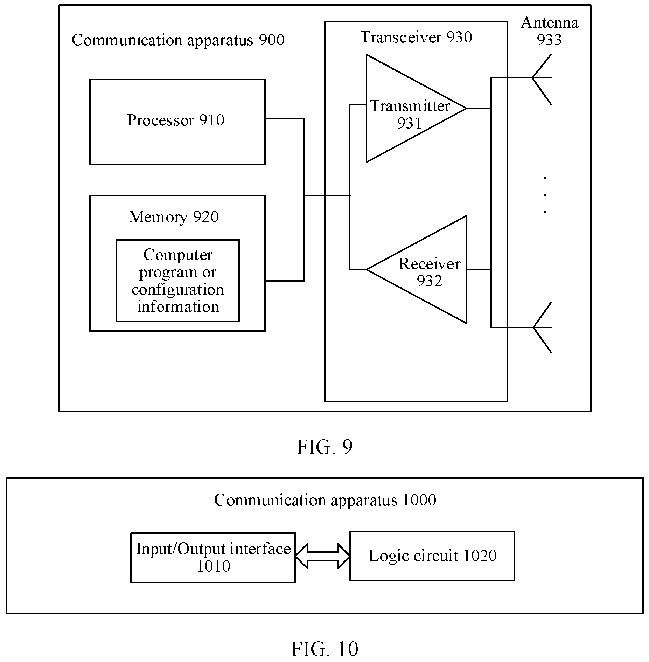

Based on a same concept, as shown in FIG. 9, an embodiment of this application provides a communication apparatus 900. The communication apparatus 900 may be a chip or a chip system. Optionally, in this embodiment of this application, the chip system may include a chip, or may include a chip and another discrete component.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a necessary computer program, configuration information, a computer program or instructions, and/or data for implementing any one of the foregoing embodiments. The processor 910 may execute the computer program stored in the memory 920, to complete the method in any one of the foregoing embodiments.

Coupling in embodiment of this application may be indirect coupling or communication connections between apparatuses, units, or modules in an electrical form, a mechanical form, or another form, and is used for information exchange between the apparatuses, the units, or the modules. The processor 910 may cooperate with the memory 920. In this embodiment of this application, a specific connection medium between the transceiver 930, the processor 910, and the memory 920 is not limited.

The communication apparatus 900 may further include the transceiver 930, and the communication apparatus 900 may exchange information with another device through the transceiver 930. The transceiver 930 may be a circuit, a bus, a transceiver, or any other apparatus that may be configured to exchange information, or is referred to as a signal transceiver unit. As shown in FIG. 9, the transceiver 930 includes a transmitter 931, a receiver 932, and an antenna 933. In addition, when the communication apparatus 900 is a chip-type apparatus or a circuit, the transceiver in the communication apparatus 900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 900 may be used in a first network element. Specifically, the communication apparatus 900 may be the first network element, or may be an apparatus that can support the first network element in implementing a function of the first network element in any one of the foregoing embodiments. The memory 920 stores a necessary computer program, a computer program or instructions, and/or data for implementing the functions of the first network element in any one of the foregoing embodiments. The processor 910 may execute the computer program stored in the memory 920, to complete the method performed by the first network element in any one of the foregoing embodiments.

In a possible implementation, the communication apparatus 900 may be used in a second network element. Specifically, the communication apparatus 900 may be the second network element, or may be an apparatus that can support the second network element in implementing a function of the second network element in any one of the foregoing embodiments. The memory 920 stores a necessary computer program, a computer program or instructions, and/or data for implementing the functions of the second network element in any one of the foregoing embodiments. The processor 910 may execute the computer program stored in the memory 920, to complete the method performed by the second network element in any one of the foregoing embodiments.

The communication apparatus 900 provided in this embodiment may be used in the second network element to complete the method performed by the second network element, or may be used in the first network element to complete the method performed by the first network element. Therefore, for technical effects that can be achieved by the communication apparatus 900, refer to the foregoing method embodiments. Details are not described herein again.

In embodiments of this application, the processor may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Based on the foregoing embodiments, refer to FIG. 10. An embodiment of this application further provides another communication apparatus 1000, including an input/output interface 1010 and a logic circuit 1020. The input/output interface 1010 is configured to receive code instructions and transmit the code instructions to the logic circuit 1020. The logic circuit 1020 is configured to run the code instructions to perform the method performed by the second network element or the first network element in any one of the foregoing embodiments.

The following describes in detail operations performed by the communication apparatus used in the second network element or the first network element.

In another optional implementation, the communication apparatus 1000 may be used in the second network element, to perform the method performed by the second network element, specifically, for example, the method performed by the second network element in the embodiment shown in FIG. 5.

The input/output interface 1010 is configured to input management and control information of a target machine learning ML entity from the first network element. The management and control information of the target ML entity includes target ML entity information and ML step requirement information. The logic circuit 1020 is configured to manage and control a machine learning procedure of the target ML entity based on the ML step requirement information.

The communication apparatus 1000 provided in this embodiment may be used in the second network element, to complete the method performed by the second network element. Therefore, for technical effects that can be achieved by the communication apparatus 1000, refer to the foregoing method embodiments. Details are not described herein again.

In an optional implementation, the communication apparatus 1000 may be used in the first network element, to perform the method performed by the first network element, specifically, for example, the method performed by the first network element in the embodiment shown FIG. 5.

The logic circuit 1020 is configured to determine management and control information of a target machine learning ML entity. The management and control information of the target ML entity includes target ML entity information and ML step requirement information. The input/output interface 1010 is configured to output the management and control information of the target ML entity to the second network element. The management and control information of the target ML entity indicates the second network element to manage and control the machine learning procedure of the target ML entity based on the ML step requirement information.

The communication apparatus 1000 provided in this embodiment may be used in the first network element, to complete the method performed by the first network element. Therefore, for technical effects that can be achieved by the communication apparatus 1000, refer to the foregoing method embodiments. Details are not described herein again.

Based on the foregoing embodiments, an embodiment of this application further provides a communication system. The communication system includes at least one communication apparatus used in a first network element and at least one communication apparatus used in a second network element. For technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the second network element or the method performed by the first network element in any one of the foregoing embodiments is implemented. The computer-readable storage medium may include any medium that can store program code, such as a USB flash drive, a removable hard disk drive, a read-only memory, a random-access memory, a magnetic disk, or an optical disc.

To implement the functions of the communication apparatuses in FIG. 7 to FIG. 10, an embodiment of this application further provides a chip, including a processor, configured to support the communication apparatuses in implementing the functions of the first network element or the second network element in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this application may indicate "and/or". For example, A/B indicates A and/or B.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

"A plurality of" in embodiments of this application refers to two or more than two.

In embodiments of this application, descriptions such as first and second are merely intended to illustrate and distinguish between described objects, but not indicate a sequence or indicate a particular limitation on a quantity of described objects in embodiments of this application, and cannot constitute any limitation on embodiments of this application.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It can be understood that, in embodiments of this application, a terminal device and/or a network device may perform some or all of steps in embodiments of this application. These steps or operations are merely examples. In embodiments of this application, other operations or variations of various operations may alternatively be performed. In addition, the steps may be performed in a sequence different from a sequence presented in embodiments of this application, and not all operations in embodiments of this application need to be performed.

## Claims

1. A machine learning management and control method, comprising:
determining, by a first network element, management and control information of a target machine learning ML entity, wherein the management and control information of the target ML entity comprises target ML entity information and ML step requirement information;
sending, by the first network element, the management and control information of the target ML entity to a second network element; and
managing and controlling, by the second network element, a machine learning procedure of the target ML entity based on the ML step requirement information.

2. The method according to claim 1, wherein the method further comprises:
sending, by the second network element, machine learning management capability information to the first network element, wherein the machine learning management capability information comprises an ML entity type and ML step capability information that are supported by the second network element; and
the determining, by a first network element, management and control information of a target machine learning ML entity comprises:
determining, by the first network element, the management and control information of the target ML entity based on the management capability information, wherein a type of the target ML entity is the ML entity type supported by the second network element, and the ML step requirement information matches the ML step capability information supported by the second network element.

3. The method according to claim 2, wherein the ML step capability information comprises one or more of the following:
names of one or more first steps, step control point capability information, or first data information, wherein the step control point capability information indicates whether setting step control points for the one or more first steps is supported, the step control point comprises a suspension point, the step control point capability information one-to-one corresponds to the one or more first steps, and the first data information is used to describe data available for the machine learning procedure of the target ML entity.

4. The method according to any one of claims 1 to 3, wherein the ML step capability information comprises one or more of the following:
names of one or more first steps, step control point capability information, and first data information, wherein the step control point capability information indicates whether setting step control points for the one or more first steps is supported, the step control point comprises a suspension point, the step control point capability information one-to-one corresponds to the one or more first steps, and the first data information is used to describe data available for the machine learning procedure of the target ML entity.

5. The method according to any one of claims 1 to 4, wherein the management and control information further comprises a machine learning procedure trigger condition, and the machine learning procedure trigger condition indicates a condition for starting the machine learning procedure of the target ML entity.

6. The method according to claim 3, wherein the ML step requirement information comprises one or more of the following: names of one or more second steps, wherein the names of the one or more second steps are a part or all of the names of the one or more first steps; step control point requirement information, wherein the step control point requirement information indicates whether to set step control points for the one or more second steps, the step control point requirement information one-to-one corresponds to the second steps, and the step control point requirement information is determined based on the step control point capability information; and second data information, wherein the second data information indicates data that needs to be used in the machine learning procedure, and the second data information is determined based on the first data information.

7. The method according to any one of claims 1 to 6, further comprising:
sending, by the second network element, startup information to the first network element, wherein
the startup information comprises a workflow identifier of the machine learning procedure of the target ML entity and an entity identifier of the target ML entity, and the startup information indicates that the second network element starts the machine learning procedure of the target ML entity.

8. The method according to any one of claims 1 to 7, wherein the startup information further comprises one or more of the following: an identifier of the management and control information, step progress information of the machine learning procedure of the target ML entity, and a version of the target ML entity, wherein the step progress information indicates execution progress of a step in the machine learning procedure of the target ML entity.

9. The method according to any one of claims 1 to 7, further comprising:
sending, by the second network element, progress change information to the first network element, wherein the progress change information comprises the workflow identifier of the machine learning procedure of the target ML entity and step progress information of the machine learning procedure of the target ML entity, and the step progress information indicates execution progress of a step comprised in the machine learning procedure of the target ML entity.

10. The method according to any one of claims 1 to 9, further comprising:
sending, by the first network element, second indication information to the second network element, wherein the second indication information comprises the workflow identifier of the machine learning procedure of the target ML entity, and the second indication information indicates the second network element to resume the machine learning procedure of the target ML entity.

11. The method according to claim 10, wherein the second indication information further comprises a name of the step comprised in the machine learning procedure of the target ML entity.

12. The method according to claim 10 or 11, wherein before the sending, by the first network element, second indication information to the second network element, the method further comprises:
receiving, by the first network element, the progress change information from the second network element, wherein the progress change information comprises the workflow identifier, and a status of the step comprised in the machine learning procedure of the target ML entity is waiting for confirmation by the first network element.

13. A machine learning management and control method, comprising:
determining, by a first network element, management and control information of a target machine learning ML entity, wherein the management and control information of the target ML entity comprises target ML entity information and ML step requirement information; and
sending, by the first network element, the management and control information of the target ML entity to a second network element, wherein the management and control information of the target ML entity indicates the second network element to manage and control a machine learning procedure of the target ML entity based on the ML step requirement information.

14. The method according to claim 13, wherein the method further comprises:
obtaining, by the first network element, machine learning management capability information from the second network element, wherein the management capability information comprises an ML entity type and ML step capability information that are supported by the second network element; and
the determining, by a first network element, management and control information of a target machine learning ML entity comprises:
determining, by the first network element, the management and control information of the target ML entity based on the management capability information, wherein a type of the target ML entity is the ML entity type supported by the second network element, and the ML step requirement information matches the ML step capability information supported by the second network element.

15. The method according to claim 14, wherein the ML step capability information comprises one or more of the following:
names of one or more first steps, step control point capability information, and first data information, wherein the step control point capability information indicates whether setting step control points for the one or more first steps is supported, the step control point comprises a suspension point, the step control point capability information one-to-one corresponds to the one or more first steps, and the first data information is used to describe data available for the machine learning procedure of the target ML entity.

16. The method according to any one of claims 13 to 15, wherein the target ML entity information comprises the type of the target ML entity, and the management and control information is used for an ML entity corresponding to the type of the target ML entity; or the target ML entity information comprises an entity identifier of the target ML entity, and the management and control information is used for the target ML entity.

17. The method according to any one of claims 13 to 16, wherein the management and control information further comprises a machine learning procedure trigger condition, and the machine learning procedure trigger condition indicates a condition for starting the machine learning procedure of the target ML entity.

18. The method according to claim 15, wherein the ML step requirement information comprises one or more of the following: names of one or more second steps, wherein the names of the one or more second steps are a part or all of the names of the one or more first steps; step control point requirement information, wherein the step control point requirement information indicates whether to set step control points for the one or more second steps, the step control point requirement information one-to-one corresponds to the second steps, and the step control point requirement information is determined based on the step control point capability information; and second data information, wherein the second data information indicates data that needs to be used in the machine learning procedure, and the second data information is determined based on the first data information.

19. The method according to any one of claims 13 to 18, further comprising:
receiving, by the first network element, startup information from the second network element, wherein the startup information comprises a workflow identifier of the machine learning procedure of the target ML entity and the entity identifier of the target ML entity, and the startup information indicates that the second network element starts the machine learning procedure of the target ML entity.

20. The method according to claim 19, wherein the startup information further comprises one or more of the following: an identifier of the management and control information, step progress information of the machine learning procedure of the target ML entity, and a version of the target ML entity, wherein the step progress information indicates execution progress of a step in the machine learning procedure of the target ML entity.

21. The method according to any one of claims 13 to 20, further comprising:
receiving, by the first network element, progress change information from the second network element, wherein the progress change information comprises the workflow identifier of the machine learning procedure of the target ML entity and step progress information of the machine learning procedure of the target ML entity, and the step progress information indicates execution progress of a step comprised in the machine learning procedure of the target ML entity.

22. The method according to any one of claims 13 to 21, further comprising:
sending, by the first network element, second indication information to the second network element, wherein the second indication information comprises the workflow identifier of the machine learning procedure of the target ML entity, and the second indication information indicates the second network element to resume the machine learning procedure of the target ML entity.

23. The method according to claim 22, wherein the second indication information further comprises a name of the step comprised in the machine learning procedure of the target ML entity.

24. The method according to claim 22 or 23, wherein before the sending, by the first network element, second indication information to the second network element, the method further comprises:
receiving, by the first network element, the progress change information from the second network element, wherein the progress change information comprises the workflow identifier, and a status of the step comprised in the machine learning procedure of the target ML entity is waiting for confirmation by the first network element.

25. A machine learning management and control method, comprising:
receiving, by a second network element, management and control information of a target machine learning ML entity from a first network element, wherein the management and control information of the target ML entity comprises target ML entity information and ML step requirement information; and
managing and controlling, by the second network element, a machine learning procedure of the target ML entity based on the ML step requirement information.

26. The method according to claim 25, further comprising:
sending, by the second network element, machine learning management capability information to the first network element, wherein the machine learning management capability information comprises an ML entity type and ML step capability information that are supported by the second network element, wherein
a type of the target ML entity is the ML entity type supported by the second network element, and the ML step requirement information matches the ML step capability information supported by the second network element.

27. The method according to claim 25 or 26, wherein the ML step capability information comprises one or more of the following:
names of one or more first steps, step control point capability information, and first data information, wherein the step control point capability information indicates whether setting step control points for the one or more first steps is supported, the step control point comprises a suspension point, the step control point capability information one-to-one corresponds to the one or more first steps, and the first data information is used to describe data that needs to be used in machine learning of the target ML entity.

28. The method according to any one of claims 25 to 27, wherein the target ML entity information comprises the type of the target ML entity, and the management and control information is used for an ML entity corresponding to the type of the target ML entity; or the target ML entity information comprises an entity identifier of the target ML entity, and the management and control information is used for the target ML entity.

29. The method according to any one of claims 25 to 28, wherein the management and control information further comprises a machine learning procedure trigger condition, and the machine learning procedure trigger condition indicates a condition for starting the machine learning procedure of the target ML entity.

30. The method according to claim 26, wherein the ML step requirement information comprises one or more of the following: names of one or more second steps, wherein the names of the one or more second steps are a part or all of the names of the one or more first steps; step control point requirement information, wherein the step control point requirement information indicates whether to set step control points for the one or more second steps, the step control point requirement information one-to-one corresponds to the second steps, and the step control point requirement information is determined based on the step control point capability information; and second data information, wherein the second data information indicates data available for machine learning, and the second data information is determined based on the first data information.

31. The method according to any one of claims 25 to 30, further comprising:
sending, by the second network element, startup information to the first network element, wherein the startup information comprises a workflow identifier of the machine learning procedure of the target ML entity and the entity identifier of the target ML entity, and the step progress information indicates execution progress of a step comprised in the machine learning procedure of the target ML entity.

32. The method according to claim 31, wherein the startup information further comprises one or more of the following: an identifier of the management and control information, step progress information of the machine learning procedure of the target ML entity, and a version of the target ML entity.

33. The method according to any one of claims 25 to 32, further comprising:
sending, by the second network element, progress change information to the first network element, wherein the progress change information comprises the workflow identifier of the machine learning procedure of the target ML entity and step progress information of the machine learning procedure of the target ML entity, and the step progress information indicates execution progress of a step comprised in the machine learning procedure of the target ML entity.

34. The method according to any one of claims 25 to 33, further comprising:
receiving, by the second network element, second indication information from the first network element, wherein the second indication information comprises the workflow identifier of the machine learning procedure of the target ML entity, and the second indication information indicates the second network element to resume the machine learning procedure of the target ML entity.

35. The method according to claim 34, wherein the second indication information further comprises a name of the step comprised in the machine learning procedure of the target ML entity.

36. The method according to claim 34 or 35, wherein before the receiving, by the second network element, second indication information from the first network element, the method further comprises:
sending, by the second network element, the progress change information to the first network element, wherein the progress change information comprises the workflow identifier, and a status of the step comprised in the machine learning procedure of the target ML entity is waiting for confirmation.

37. A communication apparatus, comprising a unit configured to perform the method according to any one of claims 13 to 24, or comprising a unit configured to perform the method according to any one of claims 25 to 36.

38. A communication apparatus, comprising a processor and a memory, wherein
the memory is configured to store a computer program or instructions; and
the processor is configured to execute the computer program or the instructions in the memory, so that the apparatus performs the method according to any one of claims 13 to 24, or the apparatus performs the method according to any one of claims 25 to 36.

39. A computer-readable storage medium, wherein the computer-readable storage medium stores computer-executable instructions, and when the computer-executable instructions are invoked by an electronic apparatus, the electronic apparatus is enabled to perform the method according to any one of claims 13 to 24, or the electronic apparatus is enabled to perform the method according to any one of claims 25 to 36.

40. A computer program product, comprising computer executable instructions, wherein when the computer executable instructions are run on a computer, the computer is enabled to perform the method according to any one of claims 13 to 24, or the electronic apparatus is enabled to perform the method according to any one of claims 25 to 36.

41. A communication system, comprising a first network element configured to perform the method according to any one of claims 13 to 24 and a second network element configured to perform the method according to any one of claims 25 to 36.
